Europäisches Patentamt

European Patent Office

Office européen des brevets

(19)

(11) Veröffentlichungsnummer: **0 129 714**
**B1**

(12) **EUROPÄISCHE PATENTSCHRIFT**

(45) Veröffentlichungstag der Patentschrift:
26.08.87

(51) Int. Cl.⁴: **H 01 G 1/02**

(21) Anmeldenummer: **84105852.2**

(22) Anmeldetag: **22.05.84**

(54) **Elektrischer Kondensator.**

(30) Priorität: **27.05.83 DE 3319373**

(43) Veröffentlichungstag der Anmeldung:
**02.01.85 Patentblatt 85/1**

(45) Bekanntmachung des Hinweises auf die Patenterteilung:
**26.08.87 Patentblatt 87/35**

(84) Benannte Vertragsstaaten:
**DE FR GB IT SE**

(56) Entgegenhaltungen:
**FR - A - 2 474 232**
**US - A - 3 770 404**
**US - A - 3 852 117**

(73) Patentinhaber: **Siemens Aktiengesellschaft Berlin und München, Wittelsbacherplatz 2, D-8000 München 2 (DE)**

(72) Erfinder: **Vetter, Harald, Dipl.-Ing., Weinberg 7, D-8400 Regensburg (DE)**

## Beschreibung

Die Erfindung betrifft einen elektrischen Kondensator, der gas- und feuchtedicht in ein metallisches Gehäuse eingebaut ist, das durch einen mit dem Gehäuse verklebten Deckel verschlossen ist.

Aus der DE-OS 28 25 459 ist ein elektrischer Kondensator bekannt, bei dem der mit dem Gehäuse durch einen Falz verbundene metallische Deckel mittels eines Klebstoffes abgedichtet ist. Diese Lösung weist jedoch nicht die erforderliche Gasund Feuchtedichtigkeit auf. Unter gasdicht werden hierbei Kondensatorengehäuse verstanden, deren Leckraten < $10^{-6}$ Pa. l/s betragen. Eine ausreichende Dichtheit gegenüber Luftfeuchtigkeit wird mit einer Klima-Zeitkonstante > 5 Jahre erreicht. Weitere Anforderungen sind ebenso gasund feuchtedichte elektrische Durchführungen durch das Kondensatorgehäuse für die aktiven Anschlüsse und eine ausreichend elastische Ausbildung des Deckels, um die Funktion einer druckabhängigen Abreisssicherung zu ermöglichen.

Gas- und feuchtedichte Kondensatorengehäuse werden derzeit durch Verwendung von lötfähigen Metallgehäusen in Verbindung mit z. B. verlöteten Keramik- bzw. Glasdurchführungen erreicht. Diese Ausführungsformen sind jedoch relativ teuer und eignen sich nicht für das Anbringen einer druckabhängigen Abreisssicherung.

Eine ausreichende Diffusionsfestigkeit gegenüber Luftfeuchtigkeit kann z. B. auch durch Epoxidharzvergussmassen erzielt werden. Es sind Hybrid-Konzepte bekannt, bei denen Aluminiumrohre als Kondensatorgehäuse verwendet werden, wobei diese Rohre nach Einbau des Kondensators stirnseitig mit Epoxidharz vergossen sind. Dadurch entsteht eine «Hüllwanddicke», die eine ausreichende Klima-Zeitkonstante zur Folge hat. Bei diesen Lösungsvarianten tritt aber das Problem auf, dass die elektrischen Durchführungen für die aktiven Anschlusselemente des Kondensators nicht genügend diffusionsfest sind. Auch Abreisssicherungen lassen sich bei dieser Ausführung nicht realisieren.

Aufgabe der Erfindung ist es daher, einen elektrischen Kondensator anzugeben, der gas- und feuchtedicht in ein metallisches Gehäuse eingebaut ist, der preisgünstig herzustellen ist und bei dem sowohl die Durchführungen gas- und feuchtedicht sind, als auch eine zuverlässig funktionierende druckabhängige Abreisssicherung angebracht werden kann.

Diese Aufgabe wird erfindungsgemäss dadurch gelöst, dass der Deckel aus einem glasfaserverstärkten Epoxidharz besteht, dass der thermische lineare Ausdehnungskoeffizient des Deckels an den Gehäusewerkstoff angepasst ist und dass der Deckel zwischen zwei im Gehäuse angeordneten gestauchten Sicken gehalten ist.

Vorzugsweise besteht das Gehäuse aus Aluminium und der Deckel weist ein Glas/Harzverhältnis von 70:30 bis 50:50 auf.

Weiterhin ist es vorteilhaft, wenn der Deckel auf seiner Aussen- und/oder Innenseite eine Kupferplattierung aufweist, in der ggf. Lötstützpunkte mit vorzugsweise verengten Abschnitten angeordnet sind.

Die Vorteile des Gegenstandes der Erfindung werden anhand der folgenden Ausführungsbeispiele näher erläutert. In der dazugehörenden Zeichnung zeigen

Fig. 1 eine teilweise geschnittene Ansicht eines Kondensatorgehäuses,

Fig. 2 einen vergrösserten Ausschnitt der Fig. 1 und

Fig. 3 eine Draufsicht auf den Deckel.

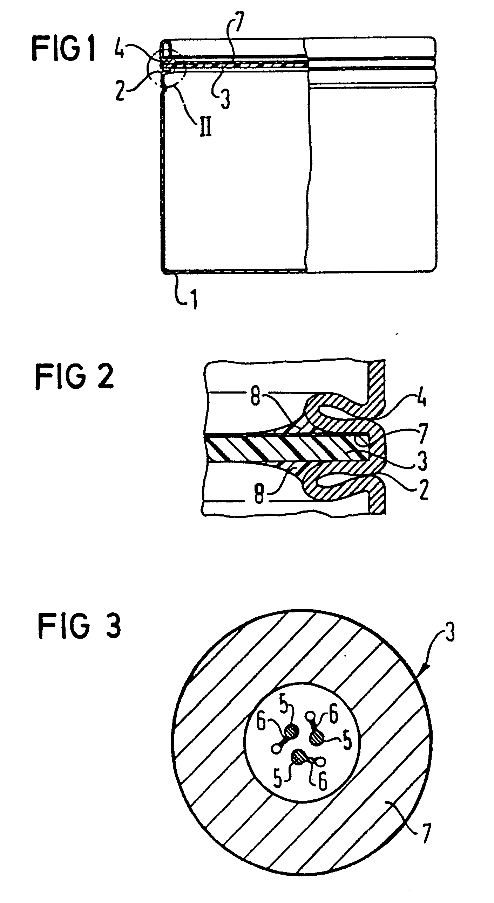

In der Fig. 1 ist in teilweise geschnittener Ansicht ein metallisches Gehäuse 1 dargestellt, das durch einen Deckel 3 verschlossen ist, der zwischen zwei gestauchten Sicken 2, 4 gehaltert ist.

Das Kondensatorgehäuse 1 besteht vorzugsweise aus einem fliessgepressten Aluminiumbecher. Dieser Becher 1 wird mit einer ersten gestauchten Sicke 2 versehen, auf die der Deckel 3 aufgesetzt wird. Vor Aufsetzen des Deckels 3 ist dieser in seinen Randbereichen umlaufend mit einem Kleber versehen. Die zweite gestauchte Sicke 4 bindet nun den Deckel 3 in Verbindung mit dem Kleber stoff- und formschlüssig in das Kondensatorgehäuse ein.

Der Deckel 3 besteht aus einem glasfaserverstärkten Epoxidharz, wobei das Glas/Harz-Verhältnis vorzugsweise 70:30 bis 50:50 beträgt. Auf der Oberseite des Deckels 3 ist eine Kupferplattierung 7 angeordnet, die mindestens einen Randstreifen von 5 mm bedeckt.

Als Klebstoff können alle bekannten Zweikomponenten- und Einkomponenten-Kleber verwendet werden, soweit sie eine ausreichende mechanische und thermische Stabilität, sowie kleine Diffusionskoeffizienten aufweisen. Beispielsweise eignen sich anaerobe Einkomponentenkleber und Zweikomponentenkleber auf Epoxidharzbasis.

Wesentlich ist, dass der thermische lineare Ausdehnungskoeffizient des Deckels 3 an den Gehäusewerkstoff angepasst ist. Die Anpassung geschieht dabei durch Änderung des Glas/Harz-Verhältnisses des Deckels 3, wobei eine Anpassung bis auf ca. 5% maximale Abweichung erreicht werden kann. Dadurch sind Undichtigkeiten auch bei Temperaturwechselbeanspruchungen des Kondensatorgehäuses nicht zu erwarten.

In Fig. 2 ist ein vergrösserter Abschnitt gemäss II der Fig. 1 dargestellt, aus dem hervorgeht, wie der Deckel 3 mittels des Klebstoffes 8 und der gestauchten Sicken 2 und 4 gas- und feuchtedicht mit dem Kondensatorengehäuse verbunden ist. Anstelle des Klebstoffes 8 kann auch ein Lot treten, wenn das Kondensatorengehäuse aus einem lötbaren Material, wie z.B. Messing, besteht.

In der Fig. 3 ist eine Draufsicht auf den Deckel 3 mit der Kupferplattierung 7 dargestellt. In der Kupferplattierung sind mittels eines Photo-Ätzverfahrens Lötstützpunkte 5 erzeugt, die mit verengten Abschnitten 6 versehen sind. Hierdurch lässt sich ein Stromsicherungseffekt erzielen (z.B. Nachbildung einer 30 A NH-Sicherungscharakteristik). Ferner lässt sich ein geometrisch von der Anschlussleitungs-Durchführung getrennter Schweiss-Lötstützpunkt herstellen, z.B. für die Bandleitung eines externen Sicherungselementes.

Die kupferplattierte Dichtscheibe 3 ist im Vergleich zu anderen Materialien relativ elastisch, so dass bei konstantem Innendruck eine relativ höhere Auswölbung möglich ist.

Dadurch wird eine Überdruckabreisssicherung mit sehr guter Ansprechempfindlichkeit realisierbar.

Versuche im Zusammenhang mit dem Test einer Abreisssicherung zeigten sehr geringe Streuungen des Ansprechdrucks von ≤ 0,5 bar. Die Berstbelastbarkeit der Dichtscheibe 3 und der Einspannstelle im Becher wurden geprüft, wobei die Dichtscheibe 3 bis zu einem Überdruck ≤ 4 bar dicht war.

Eine Leckratenbestimmung mit He als Prüfgas ergab Werte $< 0,2.10^{-6}$ Pa. l/s (Messgrenze des Massenspektrometers). Feuchtediffusions-Versuche (Raumtemperatur bzw. 50°C/100% relative Feuchte) über 2500 Stunden ergaben keine messtechnisch nachweisbare Einfeuchtung des Prüflings.

Die genannten Versuche wurden mit einem Aluminiumgehäuse (Wandstärke 0,8 mm) einem glasfaserverstärkten Epoxidharzdeckel mit einem Glas/Harz-Verhältnis von 65:35 und einer Stärke von 1,5 mm sowie einer Kupferplattierung der Stärke von 70μm durchgeführt, wobei als Klebstoff ein 2-Komponentenkleber mit Epoxidharz-Basis verwendet wurde.

**Patentansprüche**

1. Elektrischer Kondensator, der gas- und feuchtedicht in ein metallisches Gehäuse (1) eingebaut ist, das durch einen mit dem Gehäuse verklebten oder verlöteten Deckel (3) verschlossen ist, dadurch gekennzeichnet, dass der Deckel (3) aus einem glasfaserverstärkten Epoxidharz besteht, dass der thermische lineare Ausdehnungskoeffizient des Deckels (3) an den Gehäusewerkstoff angepasst ist und dass der Deckel (3) zwischen zwei im Gehäuse angeordneten gestauchten Sikken (2, 4) gehalten ist.

2. Elektrischer Kondensator nach Anspruch 1, dadurch gekennzeichnet, dass das Gehäuse (1) aus Aluminium besteht und dass der Deckel (3) ein Glas/Harz-Verhältnis von 70:30 bis 50:50 aufweist.

3. Elektrischer Kondensator nach Anspruch 1 oder 2, dadurch gekennzeichnet, dass der Deckel (3) auf seiner Aussenseite und/oder Innenseite eine Kupferplattierung (7) aufweist.

4. Elektrischer Kondensator nach Anspruch 4, dadurch gekennzeichnet, dass in der Kupferplattierung (7) Lötstützpunkte (5) angeordnet sind.

5. Elektrischer Kondensator nach Anspruch 5, dadurch gekennzeichnet, dass die Lötstützpunkte (5) verengte Abschnitte (6) aufweisen.

**Claims**

1. An electrical capacitor which is installed in metallic housing (1) so as to be impervious to gas and moisture and which is sealed by a cover (3) which is bonded to the housing by adhesive or is soldered thereto, characterised in that the cover (3) consists of a glass fibre reinforced epoxy resin, that the thermal linear expansion coefficient of the cover (3) is adapted to the material of the housing, and that the cover (3) is held between two upset ribs (2, 4) arranged in the housing.

2. An electrical capacitor as claimed in claim 1, characterised in that the housing (1) consists of aluminium and that the cover (3) has a glass/resin ratio of 70:30 to 50:50.

3. An electrical capacitor as claimed in claim 1 or claim 2, characterised in that the cover (3) is copper plated (7) on its exterior and/or interior.

4. An electrical capacitor as claimed in claim 4, characterised in that soldering terminals (5) are provided in the copper plating (7).

5. An electrical capacitor as claimed in claim 5, characterised in that the soldering terminals (5) have constricted sections (6).

**Revendications**

1. Condensateur électrique qui est monté, avec étanchéité au gaz et contre l'humidité, dans un boîtier (1) qui est fermé par un couvercle (3) collé ou soudé au boîtier, caractérisé par le fait que le couvercle (3) est formé avec une résine époxide renforcée avec des fibres de verre, que le coefficient de dilatation thermique linéaire du couvercle (3) est adapté au matériau constitutif du boîtier (3) et que le couvercle (3) est maintenu entre deux moulures (2, 4) du boîtier, obtenues par une opération de refoulement.

2. Condensateur électrique selon la revendication 1, caractérisé par le fait que le boîtier (1) est fait avec de l'aluminium et que le couvercle (3) comprend un rapport verre/résine de 70:30 à 50:50.

3. Condensateur électrique selon la revendication 1 ou 2, caractérisé par le fait que le couvercle (3) comporte, sur son côté extérieur et/ou sur son côté intérieur, un placage en cuivre (7).

4. Condensateur électrique selon la revendication 4, caractérisé par le fait que des points d'appui de soudure (5) sont disposés dans le placage de cuivre (7).

5. Condensateur électrique selon la revendication 5, caractérisé par le fait que les points d'appui de soudure (5) présentent des sections rétrécies (6).

FIG 1

FIG 2

FIG 3